# EUROPÄISCHE PATENTANMELDUNG

(11) **EP 4 559 591 A1**
(43) Veröffentlichungstag der Anmeldung: **28.05.2025**
(21) Anmeldenummer: 24188509.4
(22) Anmeldetag: 15.07.2024
(51) Int. Cl.: B08B 3/02, B08B 5/02, B25J 5/00, B24C 1/00

(54) **REINIGUNGSVORRICHTUNG FÜR PRODUKTIONSANLAGEN**

(30) Priorität: 21.11.2023 DE 102023132387
(71) Anmelder: Theegarten-Pactec GmbH & Co. KG, 01237 Dresden (DE)
(72) Erfinder: Sickert, Michael, 01099 Dresden (DE); Rattay, Jakob, 01099 Dresden (DE); Bergmann, Matthias, 01728 Bannewitz (DE)
(74) Vertreter: Grünecker Patent- und Rechtsanwälte PartG mbB

(57) **Zusammenfassung**

Die vorliegende Erfindung umfasst eine Reinigungsvorrichtung (1) zur Reinigung einer oder mehrerer Produktionsanlagen (100), insbesondere einer Verpackungsanlage zum Verpacken von kleinstückigen Artikeln, wobei die Reinigungsvorrichtung (1) umfasst: eine mobile Basisvorrichtung (2), die auf einer Ebene (E) bewegbar ist, mindestens einen Mehrachsroboter (3), der auf der mobilen Basisvorrichtung (2) angeordnet ist und am freien Ende mindestens einen Reinigungskopf (32) aufweist, der dazu konfiguriert ist, eine Produktionsanlage zu reinigen, und eine Steuervorrichtung (4), die dazu konfiguriert ist, die Bewegungen der mobilen Basisvorrichtung (2) und/oder des Mehrachsroboters (3) zu steuern und eine Reinigung der Produktionsanlage durchzuführen.

## Beschreibung

Die vorliegende Erfindung betrifft eine Reinigungsvorrichtung für Produktionsanlagen, insbesondere für Verpackungsanlagen zum Verpacken von kleinstückigen Artikeln. Die Reinigungsvorrichtung dient insbesondere der Reinigung des Innenbereichs der Produktionsanlagen bzw. der Verpackungsanlagen.

In einer Verpackungsanlage zum Verpacken von kleinstückigen Artikeln werden beispielsweise kleinstückige Artikel wie Schokoladenstücke, Brühwürfel, Waschmitteltabs, Bonbons, Kaubonbons, etc. einzeln oder in Gruppen verpackt. Bei der Handhabung derartiger Artikel, die beispielsweise aus gepresstem Pulver oder fettigen Inhaltsstoffen bestehen, verstauben bzw. verkleben insbesondere die artikelführenden Arbeitsorgane der Verpackungsanlage schnell. Durch Verbreitung der Inhaltsstoffe in der Verpackungsanlage können aber auch die Oberflächen von nicht-artikelführenden Einrichtungen der Verpackungsanlage leicht verschmutzen. Durch korrosive Inhaltsstoffe (z.B. Salz bei Brühwürfeln), können die verschmutzten Oberflächen schnell korrodieren. Das führt u.a. zu übermäßiger Abnutzung der Verpackungsanlage oder zu Fehlern im Verpackungsprozess. Die Qualität der manuellen Reinigung durch Personal ist kostenintensiv und stark von den Fertigkeiten des ausführenden Personals abhängig und damit nicht reproduzierbar. Für gleiche Reinigungsarbeiten werden, individuell, unterschiedliche Zeiten benötigt. Dies erschwert die Planung der Reinigung. Daher wurden bereits Vorrichtungen zur Reinigung von Verpackungsanlagen entwickelt.

Die DE 102 44 809 offenbart eine Vorrichtung zur Reinigung einer Verpackungsanlage, wobei die Verpackungsanlage zur Herstellung, Befüllung und Vereinzelung von Verpackungen vorgesehen ist. Zur Reinigung einer solchen Vorrichtung ist dieser seitlich eine Reinigungsvorrichtung zugeordnet, die aus einer an einem Träger gelagerten, in mehreren Freiheitsgraden gesteuert beweglichen Reinigungslanze gebildet ist, an deren freien Ende ein durch die Lanze mit Reinigungsmitteln, wie Luft, Dampf, Wasser oder Sterilisationsmittel, unter Druck beschickbarer Reinigungskopf angeordnet ist. Die Reinigungsvorrichtung ist innerhalb der Verpackungsanlage bewegbar gelagert.

Eine derartig integrierte und fest eingebaute Reinigungsvorrichtung weist aber einen hohen Platzbedarf innerhalb der Verpackungsanlage auf und erreicht lediglich Bearbeitungsstationen, die entlang der Führungsschienen der Reinigungsvorrichtung angeordnet sind. Zudem ist die Reinigungsvorrichtung eigens auf die umgebende Verpackungsanlage ausgerichtet und ist lediglich in dieser Verpackungsanlage anwendbar. Zusätzlich wird die Zugänglichkeit der Verpackungsanlage durch eine integrierte Reinigungsvorrichtung verschlechtert.

Daher ist es eine Aufgabe der vorliegenden Erfindung, eine Reinigungsvorrichtung für Produktionsanlagen, insbesondere für Verpackungsanlagen zum Verpacken von kleinstückigen Artikeln, bereitzustellen, die einen hohen Grad an Automatisierung und eine Anpassungsfähigkeit an die Produktionsanlage bietet sowie eine verlässliche Reinigung der Produktionsanlage garantiert.

Zur Lösung dieser Aufgabe stellt die vorliegende Erfindung eine Reinigungsvorrichtung für Produktionsanlagen gemäß Anspruch 1 bereit. Die Reinigungsvorrichtung umfasst eine mobile Basisvorrichtung, die auf einer Ebene bewegbar ist, mindestens einen Mehrachsroboter, der auf der mobilen Basisvorrichtung angeordnet ist und vorzugsweise am freien Ende mindestens einen Reinigungskopf aufweist, wobei der Reinigungskopf dazu konfiguriert ist, mindestens eine Produktionsanlage zu reinigen, und eine Steuervorrichtung, die dazu konfiguriert ist, die mobile Basisvorrichtung und/oder des Mehrachsroboters und/oder den Reinigungskopf zu steuern, um eine Produktionsanlage, vorzugsweise vollautomatisch zu reinigen. Die Reinigung der Produktionsanlage durch den Reinigungskopf erfolgt vorzugsweise A) mechanisch (z.B. mit einem rotierenden Bürstenkopf als Reinigungskopf) und/oder B) durch Beaufschlagung der Produktionsanlage mit einem Reinigungsmedium (z.B. Dampf) und/oder C) durch Beaufschlagung der Produktionsanlage mit Strahlung (z.B. Ultraschall, Infrarot, Laserlicht). Im Fall A) ist ein mechanischer Kontakt des Reinigungskopfs zur Produktionsanlage sinnvoll, ggf. aber nicht zwingend erforderlich. Vorzugsweise erfolgt die Reinigung der Produktionsanlage im Fall B) und C) kontaktlos, d.h. ohne Kontakt zwischen der Produktionsanlage und dem Reinigungskopf.

Durch die vorliegende Erfindung ergibt sich der Vorteil, dass durch eine von der Produktionsanlage entkoppelte Reinigungsvorrichtung in der Produktionsanlage Platz gespart werden kann. Durch den gesteuerten Mehrachsroboter kann eine von einem Reinigungspersonal unabhängige Reinigung in einer oder mehreren beliebigen Produktionsanlagen durchgeführt werden. Die Reinigungszeit ist gut planbar. Die Mobilität der Reinigungsvorrichtung garantiert gute Erreichbarkeit schwer zugänglicher Bearbeitungsstationen der Produktionsanlage. Die mobile Basisvorrichtung ist leicht aus der Produktionsanlage entfernbar. Dies erhöht die Zugänglichkeit in der Produktionsanlage. Die automatisch gesteuerte Reinigungsvorrichtung kann durch reproduzierbare automatische Reinigungszyklen für eine konstante Reinigungsqualität über den Produktionszeitraum sorgen. Der Bedarf an Reinigungspersonal wird gesenkt und der Automatisierungsgrad in der Produktionsanlage und die Verfügbarkeit der Anlage werden weiter gesteigert.

Vorteilhafte Ausführungsformen sind Gegenstände der Unteransprüche.

Es kann sinnvoll sein, wenn der Mehrachsroboter ein mehrachsiger, bevorzugt 6-achsig seriell-kinematischer Knickarmroboter ist. Diese Bauart bietet die optimale Anzahl an möglichen Freiheitsgraden des Roboters und somit die Möglichkeit trotz Engstellen in der Produktionsanlage für eine hohe Erreichbarkeit und vollständige Reinigung sämtlicher Bearbeitungsstationen in der Produktionsanlage zu sorgen.

Es kann sich als vorteilhaft erweisen, wenn der Reinigungskopf ein mit Druck beschickbarer Reinigungskopf ist, vorzugsweise mit mindestens einer auswechselbaren Reinigungsdüse, wobei der Reinigungskopf noch bevorzugter mit einem Reinigungsmittel wie Luft, (Heiß-)Dampf, Wasser, Sterilisationsmittel, Reinigungslösung und/oder Trockeneis beschickbar ist und der Reinigungskopf bevorzugt eine Kamera, eine Beleuchtungseinrichtung, eine Trocknungsvorrichtung, eine Heizvorrichtung, einen Bewegungssensor und/oder eine Messsensorik aufweist. Ein mit Wasser-, Dampf oder Luftdruck beschickbarer Reinigungskopf dient zur Sprühreinigung, wodurch auch hartnäckige Verschmutzungen in der Produktionsanlage entfernt werden können. Durch Sterilisationsmittel und Reinigungslösungen, z.B. alleine oder als Beimischung, kann für einen hohen Standard an Sauberkeit und für in der Industrie vorgegebene Richtwerte der Hygiene gesorgt werden. Heißdampf oder Trockeneis lassen die Verunreinigungen aufweichen bzw. spröde werden, wodurch das Entfernen erleichtert wird. Ein Reinigungskopf mit einer auswechselbaren Reinigungsdüse sorgt für die bedarfsgerechte Austauschbarkeit bei starker Beanspruchung. Die Kamera und die Messsensorik sorgen für eine sichere Steuerung des Mehrachsroboters innerhalb der Produktionsanlage als auch für eine mögliche Qualitätssicherung der Reinigung der Produktionsanlage. Durch die Trocknungsvorrichtung, die Beleuchtungseinrichtung, wie z.B. Infrarotstrahlung, oder die Heizvorrichtung, können die gereinigten Oberflächen der Produktionsanlage beleuchtet, beheizt oder getrocknet werden, um eine Stillstandszeit der Produktionsanlage möglichst kurz zu halten. Durch den Bewegungssensor können von der Produktionsanlage während der Reinigung durchgeführte Bewegungen bestimmter Abschnitte erkannt werden. Derart zugänglich gemachte bzw. umorientierte Abschnitte der Produktionsanlage können somit gezielt gereinigt werden.

Es kann hilfreich sein, wenn die mobile Basisvorrichtung Räder oder eine Raupenkette, insbesondere mit Saugnäpfen aufweist, um sich auf der Ebene, die insbesondere, waagerecht, schräg oder senkrecht ist, fortzubewegen, und/oder die mobile Basisvorrichtung eine Antriebsvorrichtung, bevorzugt einen von der Steuervorrichtung steuerbaren elektrischen Servo-Motor, aufweist, um die mobile Basisvorrichtung auf der Ebene anzutreiben, und/ oder die mobile Basisvorrichtung eine Feststellvorrichtung aufweist, um eine Bewegung der mobilen Basisvorrichtung temporär zu blockieren oder unwirksam zu machen. Durch die Räder kann eine Bewegung auf der Ebene garantiert werden. Die Raupenkette kann insbesondere durch Saugnäpfe eine Bewegung an schrägen bzw. vertikalen Ebenen ermöglichen. Dadurch wird eine Reinigung aus Richtung der Decke der Produktionsanlage möglich. Der Elektro-Motor sorgt für einen schadstoffvermeidenden Antrieb der Reinigungsvorrichtung. Durch die Feststellvorrichtung kann garantiert werden, dass die Reinigungsvorrichtung an einer Position innerhalb der Produktionsanlage fixiert werden kann und Bewegungen der mobilen Basisvorrichtung beispielsweise aufgrund eines Rückstoßes einer Sprühreinigung oder durch Trägheitsbewegungen des Mehrachsroboters vermieden werden können.

Es kann sich als sinnvoll erweisen, wenn die Reinigungsvorrichtung des Weiteren eine interne Versorgungseinrichtung mit mindestens einem Versorgungstank (hier zwei), der auf der mobilen Basisvorrichtung angeordnet ist und dazu konfiguriert ist, den Reinigungskopf über Versorgungsleitungen mit wenigstens einem Reinigungsmittel zu versorgen, umfasst, wobei die Steuervorrichtung bevorzugt über Energie- , Signal- und Medienleitungen mit der mobilen Basisvorrichtung und dem Mehrachsroboter verbunden ist, oder eine externe Versorgungsvorrichtung existiert, bevorzugt mobil, auf der die Steuervorrichtung angeordnet ist und die mindestens einen Versorgungstank aufweist, der dazu konfiguriert ist, den Reinigungskopf über Versorgungsleitungen mit wenigstens einem Reinigungsmittel zu versorgen, wobei die Steuervorrichtung bevorzugt drahtlos mit der mobilen Basisvorrichtung und dem Mehrachsroboter verbunden ist, wobei die Steuervorrichtung und die Versorgungstanks in einem, vorzugsweise demselben Gehäuse untergebracht sind, das dazu konfiguriert ist, die Steuervorrichtung und die Versorgungstanks vor Reinigungsflüssigkeiten und Umwelteinflüssen zu schützen. Die zentrale Versorgung der Reinigungsvorrichtung mit Mitteln zur Säuberung durch wenigstens einen auf der mobilen Basisvorrichtung angeordneten Versorgungstank ermöglicht eine weitgehend autark operierende Reinigungsvorrichtung. Mit einem Datenspeicher und Prozessor zum Abspielen eines Reinigungsprogramms oder einer drahtlosen Steuerung und mit einer auf der mobilen Basisvorrichtung vorhandenen Energiequelle (z.B. PV-Zellen) oder Energiespeichereinrichtung (z.B. Batterie oder Akku) zur Bereitstellung der Energie zum Antrieb der Basisvorrichtung sowie zum Betrieb des Mehrachsroboters und des Reinigungskopfs kann sich die Reinigungsvorrichtung kabellos, d.h. frei und unabhängig in der Produktionsanlage bewegen. Die dezentrale Versorgung der Reinigungsvorrichtung mit Reinigungsmitteln durch außerhalb der Produktionsanlage angeordneten Versorgungstanks sorgt für eine kompakte Bauweise der Reinigungsvorrichtung, die für kleinen Platzbedarf innerhalb der Produktionsanlage sorgt. Das Gehäuse dient dem Schutz der Steuervorrichtung und der Versorgungstanks vor Reinigungsflüssigkeiten und Umwelteinflüssen.

Es kann nützlich sein, wenn die Steuervorrichtung eine Ein- und Ausgabe-Schnittstelle aufweist, über die vollautomatische Reinigungsprogramme auf die Steuervorrichtung einprogrammiert oder aufgespielt werden können und die insbesondere dazu konfiguriert ist, einen Betriebszustand der Reinigungsvorrichtung mit Informationen über den Reinigungszustand der Produktionsanlage, die Laufzeit des Reinigungsprogramms und/oder den Versorgungszustand der Reinigungsvorrichtung anzuzeigen und/oder die Steuervorrichtung dazu konfiguriert ist, dass ein Anwender die Reinigungsvorrichtung auf einen manuellen Reinigungsmodus umschalten kann, um eine Steuerung der mobilen Basisvorrichtung und des Mehrachsroboters zu übernehmen bzw. im Bedarfsfall die Reinigungsdüse manuell, ohne Steuerung über den Mehrachsroboter, zu führen. Somit können die Reproduzierbarkeit und auch die Qualitätssicherung der Reinigung gewährleistet werden, aber es ist dem Anwender möglich, im Bedarfsfall flexibel einzugreifen.

Es kann sich als hilfreich erweisen, wenn die Reinigungsvorrichtung eine eigene Trockeneisproduktionseinheit aufweist, die zum Produzieren von Trockeneis und zum Versorgen des Reinigungskopfs mit Trockeneis konfiguriert ist, wobei die Trockeneisproduktionseinheit auf der mobilen Basisvorrichtung angeordnet ist. Die zentrale Versorgung der Reinigungsvorrichtung mit Trockeneis auf der mobilen Basisvorrichtung sorgt für eine in sich abgeschlossene Bauweise der Reinigungsvorrichtung, die sich somit frei und unabhängig in der Produktionsanlage bewegen kann.

Es kann praktisch sein, wenn die Reinigungsvorrichtung durch eine Energiequelle oder Energiespeichereinrichtung, bevorzugt eine Batterie, ein Akku oder eine Brennstoffzelle, mit Energie versorgt wird. Die zentrale Versorgung der Reinigungsvorrichtung mit Energie sorgt für eine in sich abgeschlossene Bauweise der Reinigungsvorrichtung, die sich somit frei und unabhängig in der Produktionsanlage bewegen kann.

Es kann sich als nützlich erweisen, wenn die Reinigungsvorrichtung eine Auffang-/Absaugvorrichtung aufweist, die auf der mobilen Basisvorrichtung angeordnet ist und dazu konfiguriert ist, Reinigungsrückstände und herabtropfende Reinigungsflüssigkeit aus der Produktionsanlage aufzufangen und abzusaugen. Dies führt zu einer vollumfänglichen Säuberung der Produktionsanlage ohne Nacharbeit. Versprühte Reinigungsflüssigkeit und der gelöste Schmutz können von der mobilen Einheit aufgefangen werden. Somit ist die Produktionsanlage schnell wieder einsatzbereit.

Die vorliegende Erfindung stellt zudem eine Verpackungsanlage zum Verpacken von kleinstückigen Artikeln bereit, wobei die Verpackungsanlage eine Reinigungsvorrichtung gemäß einem der vorangegangenen Aspekte umfasst.

Es kann sich als nützlich erweisen, wenn die Verpackungsanlage wenigstens ein Arbeitsorgan zum Halten und ggf. Fördern eines zu verpackenden Artikels umfasst, wobei die Reinigungsvorrichtung ausgebildet ist, um das wenigstens ein Arbeitsorgan unter Verwendung des Reinigungskopfs zu reinigen, wobei sich das Arbeitsorgan vorzugsweise an einem um eine Drehachse rotierbaren Rotationskopf befindet, wobei das Arbeitsorgan und der Rotationskopf dazu konfiguriert sind, sich zu bewegen bzw. zu rotieren, wenn die Reinigungsvorrichtung eine Reinigung durchführt, und/oder die Verpackungsanlage und die Reinigungsvorrichtung dazu konfiguriert sind, bevorzugt kontaktlos, in Kommunikation zu stehen, so dass das Arbeitsorgan einen Bewegungsablauf durchführt, der mit einem Reinigungszyklus der Reinigungsvorrichtung abgestimmt ist, wobei noch bevorzugter die Reinigungsvorrichtung dazu konfiguriert ist intermittierend oder kontinuierlich bewegte Abschnitte des Arbeitsorgans, bevorzugt mittels einer Schwenkbewegung des Mehrachsroboters zu reinigen. Durch Rotation des Rotationskopfs kann eine Erreichbarkeit des Arbeitsorgans durch die Reinigungsvorrichtung garantiert werden. Die Rotation des Arbeitsorgans kann zusätzlich in den Reinigungsvorgang integriert werden, z.B. in dem sich das mit dem Rotationskopf rotierende Arbeitsorgan an dem stationären Reinigungskopf vorbeibewegt und dabei gereinigt wird. Dies sorgt für vollumfängliche Säuberung des Arbeitsorgans. Durch die Kommunikation der Verpackungsanlage mit der Reinigungsvorrichtung können die Arbeitsorgane und die Rotationsköpfe derart mit der Reinigungsvorrichtung interagieren, dass die Arbeitsorgane und die Rotationsköpfe präzise gesäubert werden können.

Es kann sich als praktisch erweisen, wenn die Verpackungsanlage mehrere artikelführende Rotationsköpfe aufweist, die nach dem Prinzip aneinander abrollender Kreise zusammenwirken, wobei die Rotationsachsen der Rotationsköpfe vorzugsweise vertikal exakt übereinander oder die Rotationsköpfe zumindest vertikal überlappend angeordnet sind, wobei die mobile Basisvorrichtung derart konfiguriert ist, um unter dem untersten der Rotationsköpfe angeordnet zu werden, bevorzugt derart, um eine von den Rotationsköpfen herabtropfende Reinigungsflüssigkeit aufzufangen. Eine gute Erreichbarkeit durch die Reinigungsvorrichtung kann garantiert werden. Die Rotation der Rotationsköpfe kann zusätzlich in den Reinigungsvorgang integriert werden. Dies sorgt für vollumfängliche Säuberung der Rotationsköpfe. Eine Anordnung der mobilen Basisvorrichtung unter dem untersten Rotationskopf bewirkt durch das Auffangen von herabtropfenden Reinigungsflüssigkeiten eine schnelle Entfernungsmöglichkeit des gelösten Schmutzes. Somit ist die Produktionsanlage schnell wieder einsatzbereit.

Es kann zweckdienlich sein, wenn die Verpackungsanlage eine Verkleidung umfasst, die geöffnet sein kann um die Reinigungsvorrichtung in der Verpackungsanlage aufzunehmen und geschlossen sein kann, wenn die Reinigungsvorrichtung sich in der Verpackungsanlage befindet. Durch die Verkleidung können Anwender nicht in die Verpackungsanlage gelangen und sind dementsprechend vor dem Reinigungsprozess geschützt. Außerdem dient die Verkleidung dazu den Außenraum um die Produktionsanlage von dem Reinigungsvorgang abzuschirmen. Dies sorgt dafür, dass Prozesswasser der Reinigung nicht aus der Produktionsanlage ausströmt und beispielsweise durch die Auffang-/Absaugvorrichtung aufgefangen werden kann.

Die vorliegende Erfindung stellt zudem ein Reinigungsverfahren von Produktionsanlagen, insbesondere von Verpackungsanlagen zum Verpacken von kleinstückigen Artikeln bereit, wobei das Reinigungsverfahren folgende Schritte umfasst: Automatisiertes, teilautomatisiertes und/oder manuelles Bewegen einer Reinigungsvorrichtung in die Produktionsanlage, wobei die Reinigungsvorrichtung eine mobile Basisvorrichtung mit mindestens einem Mehrachsroboter der auf der mobilen Basisvorrichtung angeordnet ist und vorzugsweise am freien Ende mindestens einen Reinigungskopf aufweist, und automatisiertes Reinigen mindestens einer Produktionsanlage durch den mindestens einen Reinigungskopf.

Hierdurch ergibt sich im Wesentlichen derselbe Vorteil wie bei der erfindungsgemäßen Vorrichtung. Durch den gesteuerten Mehrachsroboter kann eine von einem Reinigungspersonal unabhängige Reinigung in einer beliebigen Produktionsanlage durchgeführt werden. Die Reinigungszeit ist gut planbar. Die Mobilität der Reinigungsvorrichtung garantiert gute Erreichbarkeit schwer zugänglicher Bearbeitungsstationen der Produktionsanlage. Die automatisch gesteuerte Reinigungsvorrichtung kann durch reproduzierbare automatische Reinigungszyklen für eine konstante Reinigungsqualität über den Produktionszeitraum sorgen.

Es kann sich als praktisch erweisen, wenn das Reinigungsverfahren des Weiteren mindestens einen der folgenden Schritte umfasst. Reinigen der Produktionsanlage mittels Luft, Dampf, Wasser, Sterilisationsmittel, Reinigungslösung und/oder Trockeneis. Ein mit Wasser-, Dampf oder Luftdruck beschickbarer Reinigungskopf dient zur Sprühreinigung, wodurch auch hartnäckige Verschmutzungen in der Produktionsanlage entfernt werden können. Durch Sterilisationsmittel und Reinigungslösungen können hohe Standards an Sauberkeit und in der Industrie vorgegebene Hygiene-Richtwerte erreicht werden. Heißdampf oder Trockeneis lassen die Verunreinigungen aufweichen bzw. spröde werden, wodurch das Entfernen erleichtert wird. Ein weiterer Schritt ist das Betreiben von rotierenden Bearbeitungsstationen innerhalb der Produktionsanlage zur Unterstützung der Reinigung. Durch Rotation der Bearbeitungsstationen kann eine Erreichbarkeit durch die Reinigungsvorrichtung ermöglicht werden. Die Rotation der Bearbeitungsstationen kann zusätzlich in den Reinigungsvorgang integriert werden, z.B. in dem sich die Bearbeitungsstation an dem stationären Reinigungskopf vorbeibewegt und dabei gereinigt wird. Dies sorgt für vollumfängliche Säuberung der Bearbeitungsstation. Ein weiterer Schritt ist das

Auffangen und Absaugen von Reinigungsrückständen und herabtropfenden Reinigungsflüssigkeiten. Dies führt zu einer vollumfänglichen Säuberung der Produktionsanlage ohne Nacharbeit. Versprühte Reinigungsflüssigkeiten und der gelöste Schmutz können von der mobilen Einheit aufgefangen werden. Somit ist die Produktionsanlage schnell wieder einsatzbereit.

Es kann sich als hilfreich erweisen, wenn in dem Reinigungsverfahren, die Produktionsanlage und die Reinigungsvorrichtung, bevorzugt kontaktlos, in Kommunikation treten, so dass Bewegungsabläufe in der Produktionsanlage mit einem Reinigungszyklus der Reinigungsvorrichtung abgestimmt werden, wobei noch bevorzugter die Reinigungsvorrichtung intermittierend oder kontinuierlich bewegte Abschnitte der Produktionsanlage, bevorzugt mittels einer Schwenkbewegung des Mehrachsroboters, reinigt. Durch die Kommunikation der Produktionsanlage mit der Reinigungsvorrichtung können Arbeitsorgane der Produktionsanlage derart mit der Reinigungsvorrichtung interagieren, dass sie präzise gesäubert werden können.

Weitere vorteilhafte Weiterbildungen ergeben sich durch Kombinationen der Merkmale, die in der Beschreibung, den Figuren und den Ansprüchen offenbart sind.

### Kurze Beschreibung der Figuren

Es zeigen:
Fig. 1 eine Seitenansicht einer ersten Ausführungsform einer erfindungsgemäßen Reinigungsvorrichtung zum Reinigen einer Produktionsanlage.
Fig. 2 eine perspektivische Ansicht einer zweiten Ausführungsform einer erfindungsgemäßen Reinigungsvorrichtung zum Reinigen einer Produktionsanlage.
Fig. 3 eine perspektivische Ansicht der zweiten Ausführungsform einer erfindungsgemäßen Reinigungsvorrichtung ohne Versorgungseinrichtung in einer Produktionsanlage.
Fig. 4 eine perspektivische Ansicht der zweiten Ausführungsform einer erfindungsgemäßen Reinigungsvorrichtung mit Versorgungseinrichtung in einer Produktionsanlage mit geschlossener Verkleidung.

### Detaillierte Beschreibung der bevorzugten Ausführungsbeispiele

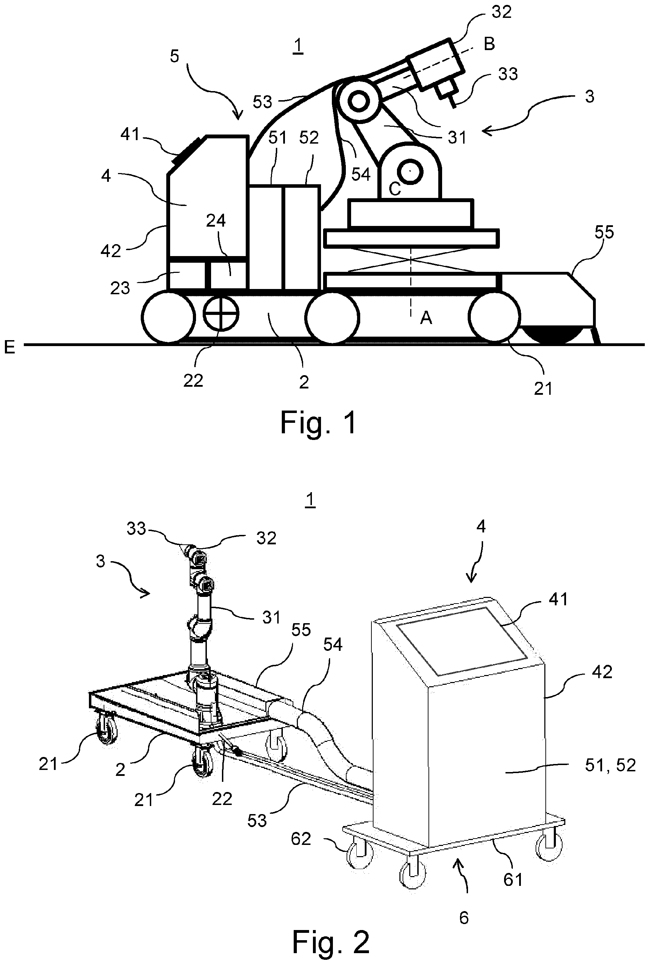

Fig. 1 zeigt eine Seitenansicht einer ersten Ausführungsform einer erfindungsgemäßen Reinigungsvorrichtung 1 zum Reinigen von Produktionsanlagen 100. Eine Produktionsanlage 100 kann eine Verpackungsanlage, eine Montageanlage, eine Transportanlage oder dergleichen sein. Die Reinigungsvorrichtung 1 kann nacheinander in verschiedenen Produktionsanlagen 100 verwendet werden. Somit ist eine hohe Variabilität in der Anwendung der Reinigungsvorrichtung 1 gegeben. Die Reinigungsvorrichtung 1 der ersten Ausführungsform ist auf einer waagrechten Ebene (E) angeordnet. Die Reinigungsvorrichtung 1 umfasst eine mobile Basisvorrichtung 2, einen Mehrachsroboter 3 und eine Steuervorrichtung 4.

Die mobile Basisvorrichtung 2 umfasst eine Bewegungsvorrichtung in Form einer Raupenkette 21, womit sich die mobile Basisvorrichtung 2 frei auf der waagrechten Ebene (E) bewegen und drehen kann. Die mobile Basisvorrichtung 2 kann durch die Raupenkette 21 rotieren, ohne eine transversale Bewegung durchzuführen. Die mobile Basisvorrichtung 2 umfasst zudem eine Feststellvorrichtung 22, wodurch die mobile Basisvorrichtung 2 temporär an ihrer Position fixiert werden kann und eine Bewegung der Raupenkette 21 blockiert oder wirkungslos ist, beispielsweise durch Ausheben der Basisstation. Die mobile Basisvorrichtung 2 wird durch eine Antriebsvorrichtung 23 angetrieben. Die Antriebsvorrichtung 23 ist ein Motor, vorzugsweise ein elektrischer Servo-Motor der einen schadstoffvermeidenden Antrieb der Reinigungsvorrichtung 1 bereitstellt. Die Antriebsvorrichtung 23 wird von einer Energiequelle 24 mit Energie gespeist. Die Energiequelle 24 ist auf der mobilen Basisvorrichtung 2 angeordnet und ist eine aufladbare Batterie. Die Energiequelle 24 kann auch eine Brennstoffzelle oder ein Akku sein. Die Energiequelle 24 kann auch den Mehrachsroboter 3, den Reinigungskopf 32 und die Steuervorrichtung 4 mit Energie versorgen.

Auf der mobile Basisvorrichtung 2 ist der Mehrachsroboter 3 angeordnet. Der Mehrachsroboter 3 ist ein 6-achsig seriell-kinematischer Knickarmroboter 3 mit Roboterarmen 31 und einem Reinigungskopf 32. Der Mehrachsroboter 3 hat sechs Bewegungs-Freiheitsgrade. Der Reinigungskopf 32 ist am freien Ende des Mehrachsroboters 3 angeordnet. Der Mehrachsroboter 3 kann bis zu drei Rotationsachsen A, B, C aufweisen. Die Roboterarme 31 sind bevorzugt als Teleskoparme ausgebildet. Der Mehrachsroboter 3 ist auf eine Hebe- und Senkvorrichtung angeordnet. Der Reinigungskopf 32 kann mittels Bewegung der Arme und Gelenke des Mehrachsroboters 3 in sämtliche Richtungen geschwenkt werden. Der Mehrachsroboter wird durch die Energiequelle 24 mit Energie gespeist.

Auf der mobilen Basisvorrichtung 2 ist zudem die Steuervorrichtung 4 angeordnet. Die Steuervorrichtung 4 ist beispielsweise eine Zentraleinheit (CPU) oder eine Mikroprozessoreinheit (MPU). Die Steuervorrichtung 4 kann einen oder mehrere Mikrocomputer beinhalten. Vorzugsweise ist ferner eine Speichereinheit in der Steuervorrichtung 4 vorgesehen. Die Speichereinheit speichert Informationen, die in verschiedenen Steuerungsprogrammen und Steuerungsprozessen der Reinigungsvorrichtung verwendet werden. Die Steuervorrichtung 4 wird durch Energieleitungen (nicht dargestellt) von der Energiequelle 24 mit Energie gespeist. Die Steuervorrichtung 4 steuert den Antrieb und die Raupenkette 21 der mobilen Basisvorrichtung 2 und kann die Feststellvorrichtung 22 auslösen. Die Steuervorrichtung 4 ist mittels Energie-, Signalleitungen 53 mit dem Mehrachsroboter 3 verbunden. Ein auf die Steuervorrichtung 4 aufgespieltes Bewegungs- und Reinigungsprogramm wird vollautomatisch von der Reinigungsvorrichtung 1 ausgeführt, wobei die Steuervorrichtung 4 die mobile Basisvorrichtung 2 und den Mehrachsroboter 3 entsprechend steuert. Die Bewegungen des Mehrachsroboters 3 und der mobilen Basisvorrichtung 2 werden basierend auf einem Reinigungsprogramm durch die Steuervorrichtung 4 ausgelöst. Es wird ein Reinigungszyklus durchgeführt. Dazu fährt die Reinigungsvorrichtung 1 zyklisch oder kontinuierlich definierte Arbeitswinkel an, die eine optimale Erreichbarkeit der Bearbeitungsstationen innerhalb der Produktionsanlage 100 bieten. Nach dem Reinigungszyklus verfährt die Reinigungsvorrichtung 1 automatisch in eine Ruheposition in der die Energiequelle 24 aufgeladen werden kann. Alternativ kann die Reinigungsvorrichtung 1 direkt in eine weitere Produktionsanlage 100 fahren um eine Folgereinigung durchzuführen.

Die Steuervorrichtung 4 umfasst eine Ein- und Ausgabe-Schnittstelle 41, über die durch einen Anwender vollautomatische Reinigungsprogramme auf die Steuervorrichtung 4 einprogrammiert oder aufgespielt werden können. Die Ein- und Ausgabe-Schnittstelle 41 zeigt via Display einen Betriebszustand der Reinigungsvorrichtung 1 mit Informationen über den Reinigungszustand der Produktionsanlage 100, die Laufzeit des Reinigungsprogramms und/oder den Versorgungszustand der Reinigungsvorrichtung 1 an. Über die Ein- und Ausgabe-Schnittstelle 41 kann ein Anwender die Reinigungsvorrichtung 1 auf einen manuellen Reinigungsmodus umschalten, um eine Steuerung der mobilen Basisvorrichtung 2 und des Mehrachsroboters zu übernehmen. Hierzu kann eine Fernbedienung oder ein Joystick an die Steuervorrichtung 4 angeschlossen werden, ggf. drahtlos. Des Weiteren kann die Reinigungsvorrichtung 1 in der Produktionsanlage 100 in einem Standby-Modus, in der sich die Reinigungsvorrichtung 1 auf einen kleinstmöglichen Raum zusammenfährt, verbleiben. In einem derartigen Modus stört die Reinigungsvorrichtung 1 eine Produktion in der Produktionsanlage 100 nicht.

Die Steuervorrichtung 4 ist in einem Gehäuse 42 geschützt. Das Gehäuse 42 weist eine wasserabweisende Außenverschalung auf, die die Steuervorrichtung 4 vor Reinigungsflüssigkeiten und Umwelteinflüssen schützt. Die Antriebsvorrichtung 23 und die Energiequelle 24 sind ebenfalls in dem Gehäuse 42 angeordnet und durch dieses geschützt.

Der Reinigungskopf 32 weist mindestens eine auswechselbare Reinigungsdüse 33 auf. Die Reinigungsdüse 33 ist dazu konfiguriert, unter Druck versetzte Fluide wie Luft, Dampf, Wasser, Sterilisationsmittel, Reinigungslösung und/oder Trockeneis zu versprühen. Die Intensität eines Fluidstrahls der Reinigungsdüse 33 kann variiert werden. Die mindestens eine auswechselbare Reinigungsdüse 33 wird mittels Versorgungsleitungen 54 mit Mitteln zur Säuberung versorgt. Die Versorgungsleitungen 54 verlaufen entlang der Roboterarme 31 bis zum Reinigungskopf 32 des Mehrachsroboters 3. Die mobile Basisvorrichtung 2 weist mindestens einen Versorgungstank 51, 52 auf (hier zwei), der Mittel zur Säuberung beinhaltet. Eine durch die Antriebsvorrichtung 23 betriebene Pumpe (nicht dargestellt) sorgt für den Fluidstrom aus dem mindestens einen Versorgungstank 51, 52 in die Reinigungsdüse 33. Die Reinigung durch die Reinigungsdüse 33 wird basierend auf dem Reinigungsprogramm durch die Steuervorrichtung 4 ausgelöst. Nach dem Reinigungszyklus verfährt die Reinigungsvorrichtung 1 automatisch in eine Ruheposition in der mindestens ein Versorgungstank 51, 52 automatisch gefüllt wird oder gefüllt werden kann. Die Reinigungsvorrichtung 1 kann auch zu einer weiteren Produktionsanlage 100 fahren, um dort einen weiteren Reinigungszyklus durchzuführen.

Auf der mobilen Basisvorrichtung 2 ist eine Auffang-/Absaugvorrichtung 55 angeordnet, die dazu konfiguriert ist, Reinigungsrückstände und herabtropfende Reinigungsflüssigkeit aus der Produktionsanlage 100 aufzufangen und abzusaugen. Die Auffang-/Absaugvorrichtung 55 kann beispielsweise als Lüftungsvorrichtung gestaltet sein, die Luft ansaugt und filtert. Die Auffang-/Absaugvorrichtung 55 kann ebenso als ein Auffangbecken gestaltet sein, das herabtropfende Reinigungsmittel auffängt. Die Auffang-/Absaugvorrichtung 55 kann beispielsweise auch als eine Wischvorrichtung mit Gummilippe gestaltet sein die auf den Boden getropfte Reinigungsrückstände aufwischt. Die Verwendung der Auffang-/Absaugvorrichtung 55 führt zu einer vollumfänglichen Säuberung der Produktionsanlage 100 ohne notwendige Nacharbeit. Versprühte Reinigungsflüssigkeiten und der gelöste Schmutz können von der mobilen Einheit 2 aufgefangen werden. Somit ist die Produktionsanlage 100 schnell wieder einsatzbereit.

Der Reinigungskopf 32 kann eine Kamera, eine Beleuchtungseinrichtung, eine Trocknungsvorrichtung, eine Heizvorrichtung, einen Bewegungssensor und/oder eine Messsensorik (jeweils nicht dargestellt) aufweisen. Die Kamera und die Messsensorik sind mit der Steuerungsvorrichtung 4 verbunden und unterstützen eine sichere Steuerung des Mehrachsroboters 3 innerhalb der Produktionsanlage 100. Ein Anwender kann auch eine Qualitätssicherung der Reinigung der Produktionsanlage 100 durchführen, indem Bilder und Daten von der Kamera und der Messsensorik an die Ein- und Ausgabe-Schnittstelle 41 gesendet werden. Durch die Beleuchtungseinrichtung, wie z.B. Infrarotstrahlung oder die Trocknungsvorrichtung bzw. die Heizvorrichtung können gereinigte Bearbeitungsstationen der Produktionsanlage 100 getrocknet werden, um eine Stillstandszeit der Produktionsanlage 100 möglichst kurz zu halten.

Durch den Bewegungssensor können von der Produktionsanlage 100 während der Reinigung durchgeführte Bewegungen bestimmter Abschnitte der Produktionsanlage 100 erkannt werden. Durch deren Bewegung zugänglich gemachte bzw. umorientierte Abschnitte der Produktionsanlage 100 können somit gezielt gereinigt werden. So erkennt die Steuerungsvorrichtung 4 beispielsweise, eine Rotation eines Arbeitsorgans oder eine Auf- und Zu-Bewegung von Greiforganen und kann dementsprechend Abschnitte reinigen die zuvor nicht erreichbar waren.

Die Steuerungsvorrichtung 4 hat Zugriff auf sämtliche Informationen, die durch die Kamera, die Bewegungssensoren und die Messsensorik erfasst werden. Die Steuerungsvorrichtung 4 kann durch eine Kombination mit einer Regelung den Reinigungsvorgang basierend auf den Informationen regeln. Beispielsweise, kann die Steuerungsvorrichtung 4 den Mehrachsroboter 3 veranlassen einen Abstand zu einem zu reinigenden Abschnitt der Produktionsanlage 100 zu verändern, wenn die Kamera und die Messsensorik erfassen, dass ein Abstand ungeeignet ist.

Die Steuerungsvorrichtung 4 ist insbesondere dazu geeignet, Bereiche innerhalb der Produktionsanlage 100 zu erkennen, die nicht gereinigt werden sollen, bzw. nicht mit Reinigungsmitteln in Berührung kommen sollen. Durch die Kamera und die Messsensorik können in der Produktionsanlage 100 beispielsweise elektronische oder korrosionsanfällige Komponenten erkannt werden und explizit vom Reinigungsvorgang ausgeschlossen werden. Für eine Reinigung ungeeignete Bereiche einer Produktionsanlage 100 können auch im Reinigungsprogramm abgespeichert sein und beispielsweise mittels QR Code innerhalb der Produktionsanlage 100 erkannt und vermieden werden.

Die Steuerungsvorrichtung 4 ist zudem dazu geeignet, mit einer Steuervorrichtung der Produktionsanlage 100 bevorzugt kontaktlos, in Kommunikation zu treten, so dass Bewegungsabläufe in der Produktionsanlage 100 mit einem Reinigungszyklus der Reinigungsvorrichtung abgestimmt werden. Durch Übergabe des Reinigungsprogramms an die Produktionsanlage 100 kann die Mechanik der Produktionsanlage 100 genutzt werden um den Reinigungsprozess zu unterstützen. Beispielsweise können Arbeitsköpfe in der Produktionsanlage 100 bewegt oder rotiert werden, um daran angeordnete Arbeitsorgane intermittierend oder kontinuierlich am Reinigungskopf 32 vorbeizuführen. Somit wird in einem Reinigungstakt jeweils ein Arbeitsorgan dem Reinigungskopf 32 zugewandt. Greiforgane an den Arbeitsorganen können im gleichen Takt geöffnet und geschlossen werden. Somit kann die Reinigungsvorrichtung 1 gezielt die verschmutzten Greifflächen der Greiforgane mit Reinigungsmitteln beaufschlagen. Zudem können Arbeitsorgane der Reinigungsvorrichtung 1 ausweichen, um nicht mit Reinigungsmittel beaufschlagt zu werden oder den Reinigungskopf 32 nicht zu behindern.

Die Zusammensetzung aus Steuervorrichtung 4, Antriebsvorrichtung 23, Energiequelle und Versorgungstank 51, 52 auf der mobilen Basisvorrichtung 2 kann als interne Versorgungseinrichtung 5 zusammengefasst werden, die für eine in sich abgeschlossene Bauweise der Reinigungsvorrichtung 1 sorgt, die sich frei und unabhängig in der Produktionsanlage 100 bewegen kann. Der Reinigungsvorgang kann autark und ohne Verbindung zur Umgebung der Produktionsanlage 100 durchgeführt werden. Dabei kann die Produktionsanlage 100 vollständig geschlossen werden, um die Sicherheit von um die Produktionsanlage 100 arbeitenden Personen zu gewährleisten.

Fig. 2 zeigt eine perspektivische Ansicht einer zweiten Ausführungsform der erfindungsgemäßen Reinigungsvorrichtung 1 zum Reinigen der Produktionsanlage 100. In einigen Merkmalen unterscheidet sich die zweite Ausführungsform nicht von der ersten Ausführungsform. Der Einfachheit halber werden im Folgenden lediglich die Merkmale beschrieben, die in der zweiten Ausführungsform anders gestaltet sind als in der ersten Ausführungsform.

Die Reinigungsvorrichtung 1 der zweiten Ausführungsform weist Räder 21 auf. Die Reinigungsvorrichtung 1 der zweiten Ausführungsform weist zudem eine externe Versorgungseinrichtung 6 auf, auf der eine Steuervorrichtung 4 und mindestens ein Versorgungstank 51, 52 angeordnet ist. Die externe Versorgungseinrichtung 6 weist eine externe Basisvorrichtung 61 mit Rädern 62 auf. Die externe Versorgungseinrichtung 6 verbleibt außerhalb der Produktionsanlage 100, während die mobile Basisvorrichtung 2 innerhalb der Produktionsanlage 100 an einer Reinigungsposition positioniert ist. Der Mehrachsroboter 3 auf der mobilen Basisvorrichtung 2 ist mittels Versorgungsleitungen 53, 54 mit der Steuervorrichtung 4 und dem mindestens einen Versorgungstank 51, 52 auf der externe Versorgungseinrichtung 6 verbunden. Der Reinigungskopf 32 wird via Versorgungsleitungen 53, 54 mit Energie sowie Mitteln zur Säuberung von der externen Versorgungseinrichtung 6 aus versorgt. Die Steuervorrichtung 4 kann drahtlos mit der mobilen Basisvorrichtung 2 und dem Mehrachsroboter 3 verbunden sein und diese fernsteuern. Die Produktionsanlage 100 kann eine Öffnung mit Spritz-Vorhang aufweisen, durch den die Versorgungsleitungen 53, 54 verlegt werden können. Somit kann die Produktionsanlage 100 auch bei Versorgung mittels externer Versorgungseinrichtung 6 vollständig geschlossen werden, um die Sicherheit von um die Produktionsanlage 100 arbeitenden Personen zu gewährleisten.

Die dezentrale Versorgung der Reinigungsvorrichtung 1 mit Mitteln zur Säuberung durch den auf der externen Versorgungseinrichtung 6 und somit außerhalb der Produktionsanlage 100 angeordneten Versorgungstank 51, 52 sorgt für eine kompakte Bauweise der Reinigungsvorrichtung und für einen kleinen Platzbedarf innerhalb der Produktionsanlage 100. Zudem werden eine Befüllung des Versorgungstanks 51, 52 und eine Bedienung der Ein- und Ausgabe-Schnittstelle 41 durch bessere Zugänglichkeit vereinfacht.

Die Auffang-/Absaugvorrichtung 55 ist auf der mobilen Basisvorrichtung 2 angeordnet. In der zweiten Ausführungsform ist die Auffang-/Absaugvorrichtung 55 in Form eines Lüftungssystems gestaltet, das die Luft innerhalb der Produktionsanlage 100 lüftet, Verschmutzungspartikel aus der Luft filtert und Schmutzrückstände durch eine Versorgungsleitung 54 zur externen Versorgungseinrichtung 6 zurückführt.

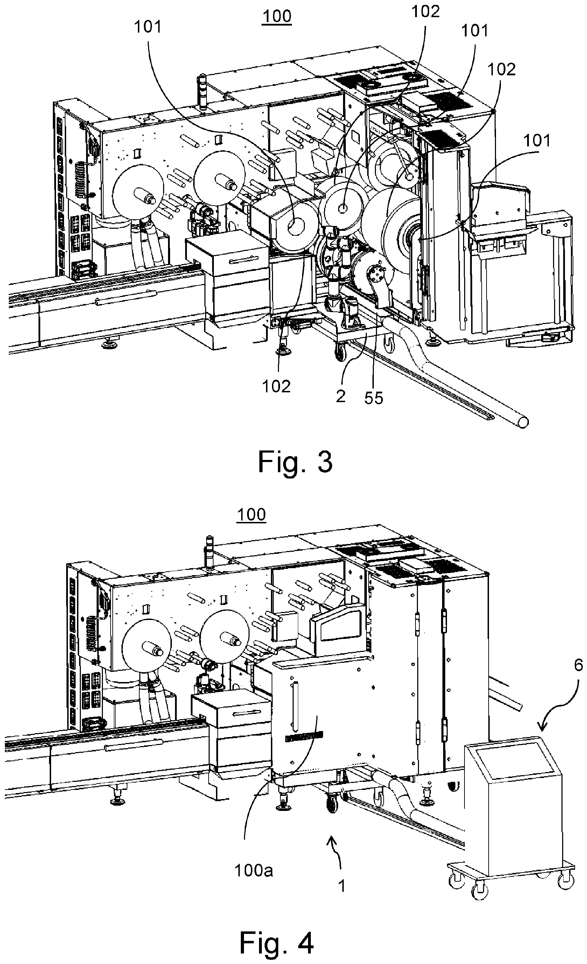

Fig. 3 zeigt eine perspektivische Ansicht der zweiten Ausführungsform einer erfindungsgemäßen Reinigungsvorrichtung 1 in der Produktionsanlage 100. Die Produktionsanlage 100 ist eine Verpackungsanlage 100 zum Verpacken von kleinstückigen Artikeln, in die die mobile Basisvorrichtung 2 samt Mehrachsroboter 3 eingefahren ist.

Die Verpackungsanlage 100 ist beispielsweise geeignet zur Verpackung von Schokoladenstücken, Brühblöcken oder -würfeln, Spül- oder Waschmitteltabs, Bonbons, Kaubonbons, oder dergleichen. Die Verpackungsanlage 100 umfasst mehrere Bearbeitungsstationen in Form von Arbeitsorganen 102 zum Halten und ggf. Fördern eines zu verpackenden Artikels. Die Arbeitsorgane 102 können Halteorgane, Faltelemente oder Siegelstempel oder dergleichen sein. Die Arbeitsorgane 102 befinden sich jeweils an einem um eine Drehachse rotierbaren Rotationskopf 101. Die Reinigungsvorrichtung 1 reinigt die Arbeitsorgane 102 unter Verwendung des Reinigungskopfs 32. Durch die Freiheitsgrade des Mehrachsroboters 3 erreicht der Reinigungskopf 32 mehrere Bearbeitungsstationen der Verpackungsanlage 100 und reinigt die Verpackungsanlage 100 teilweise (als Zwischenreinigung während der Produktionszeit) oder vollständig (z.B. nach einem Produktionszyklus).

Die Verpackungsanlage 100 weist mehrere artikelführende Rotationsköpfe 101 auf, die nach dem Prinzip aneinander abrollender Kreise zusammenwirken, wobei die Rotationsachsen der Rotationsköpfe 101 vertikal exakt übereinander oder die Rotationsköpfe 101 zumindest vertikal überlappend angeordnet sind. Die mobile Basisvorrichtung 2 samt Mehrachsroboter 3 wird unter derartig angeordneten Rotationsköpfen 101 positioniert. Somit fängt die Reinigungsvorrichtung 1 eine von den Rotationsköpfen 101 herabtropfende Reinigungsflüssigkeit auf. Während der Reinigung können die Rotationsköpfe 101 im Leerlauf rotiert werden. Somit können die Rotationsköpfe 101 samt Arbeitsorganen 102 vollumfänglich gereinigt werden. Zudem kann durch die Zentrifugalkraft Reinigungsmittel weiter in der Verpackungsanlage 100 verteilt werden. Mit Leitflächen bzw. -blechen in der Verpackungsanlage 100 kann der Lauf der Reinigungsmittel zu einer bodenseitigen Ausgabeöffnung kanalisiert werden. Unter dieser bodenseitigen Ausgabeöffnung kann die mobile Basisvorrichtung 2 angeordnet werden, um das Reinigungsmittel aufzufangen. Dies führt zu einer vollständigen Reinigung der Verpackungsanlage 100.

Die Verpackungsanlage 100 und die Reinigungsvorrichtung 1 können, bevorzugt kontaktlos, in Kommunikation stehen, so dass ein Reinigungszyklus, bevorzugt sogar ein Reinigungstakt der Reinigungsvorrichtung 1 auf einen Bewegungsablauf der Verpackungsanlage 100 abgestimmt wird. Beispielsweise können, in einem derartig abgestimmten Reinigungsprozess, ein Rotationskopf 101 und ein daran angeordnetes Arbeitsorgan 102 einen Bewegungsablauf durchführen, der mit einer Bewegung des Reinigungskopfes 32 interagiert. So kann die Reinigungsvorrichtung 1 Abschnitte des Arbeitsorgans 102, beispielsweise Greiforgane die sich intermittierend auf und zu bewegen, im Takt des Reinigungszyklus mit Reinigungsmittel beaufschlagen. Beispielsweise können die Rotationsköpfe 101 intermittierend oder kontinuierlich bewegt oder rotiert werden, um daran angeordnete Arbeitsorgane 102 am Reinigungskopf 32 vorbeizuführen. Somit wird in einem Reinigungstakt jeweils ein Arbeitsorgan 102 dem Reinigungskopf 32 zugewandt. Somit kann die Reinigungsvorrichtung 1 die verschmutzten Arbeitsorgane 102, bevorzugt mittels einer Schwenkbewegung des Mehrachsroboters 3 gezielt mit Reinigungsmitteln beaufschlagen. Die genannten abgestimmten Bewegungsabläufe der Rotationsköpfe 101 und der Arbeitsorgane 102 können kombiniert werden. Zudem können durch die Kommunikation der Verpackungsanlage 100 und der Reinigungsvorrichtung 1, Arbeitsorgane 102 der Verpackungsanlage 100 explizit dazu veranlasst werden der Reinigungsvorrichtung 1 auszuweichen, um nicht mit Reinigungsmittel beaufschlagt zu werden oder den Reinigungskopf 32 nicht zu behindern.

Fig. 4 zeigt eine perspektivische Ansicht der zweiten Ausführungsform der erfindungsgemäßen Reinigungsvorrichtung 1 mit Versorgungsstation in einer Produktionsanlage 100. Die Produktionsanlage 100 weist eine Verkleidung 100a auf. Die Verkleidung 100a kann geöffnet werden, um einen zu reinigenden Innenraum in der Produktionsanlage 100 für die Reinigungsvorrichtung 1 zugänglich zu machen. Nachdem die Reinigungsvorrichtung 1 in den Innenraum der Produktionsanlage 100 bewegt wurde und eine Reinigungsposition eingenommen hat, kann die Verkleidung 100a hinter der Reinigungsvorrichtung 1 geschlossen werden.

Die Verkleidung 100a stellt eine Sicherheitsbarriere dar, dass ein Anwender der Produktionsanlage 100 nicht in die Produktionsanlage 100 gelangen kann, während der Reinigungsprozess durchgeführt wird. Somit kann ein Anwender vor Verletzungen durch die Reinigungsanlage 1 geschützt werden. Die Verkleidung 100a dient zudem dazu den Außenraum um die Produktionsanlage 100 von dem Reinigungsvorgang abzuschirmen. Dies sorgt dafür, dass Prozesswasser der Reinigung nicht aus der Produktionsanlage 100 ausströmt und beispielsweise durch die Auffang-/Absaugvorrichtung 55 aufgefangen werden kann.

Fig. 4 zeigt die externe Versorgungseinrichtung 6 die außerhalb der Produktionsanlage 100 angeordnet ist und mittels Versorgungsleitungen 53, 54 mit der Reinigungsvorrichtung 1 verbunden ist. An der Verkleidung 100a sind Aussparungen vorgesehen, durch die die Versorgungsleitungen 53, 54 in die Produktionsanlage 100 geführt werden können, selbst wenn die Verkleidung 100a geschlossen ist. Dies dient dazu die externe Versorgungseinrichtung 6 von dem Reinigungsvorgang abzuschirmen, so dass diese geschützt wird und nicht wasserdicht ausgeführt sein muss. Dies spart Herstellungskosten für die externe Versorgungseinrichtung 6.

Die vorliegende Erfindung ist nicht auf die beschriebenen Ausführungsbeispiele beschränkt. Weitere Abänderungen und Variationen der Ausführungsbeispiele sind denkbar.

So kann die Reinigungsvorrichtung 1 zudem auf der mobilen Basisvorrichtung 2 eine eigene Trockeneisproduktionseinheit (nicht dargestellt) aufweisen, die zum Produzieren von Trockeneis und zum Versorgen des Reinigungskopfs 32 mit Trockeneis konfiguriert ist. Die zentrale Versorgung der Reinigungsvorrichtung mit Trockeneis auf der mobilen Basisvorrichtung sorgt für eine in sich abgeschlossene Bauweise der Reinigungsvorrichtung 3, die sich somit frei und unabhängig in der Produktionsanlage 100 bewegen kann.

Die mobile Basisvorrichtung 2 kann Saugnäpfe aufweisen, um eine Bewegung an einer schrägen bzw. vertikalen Ebene E zu ermöglichen. Die mobile Basisvorrichtung 2 kann zudem eine Magnetführung aufweisen. Somit wird eine Reinigung beispielsweise aus einer Decken-Richtung der Produktionsanlage 100 möglich. Dies bietet zusätzliche Zugangsmöglichkeiten bei vollständig ausgenutzter Bodenfläche der Produktionsanlage 100.

Es ist zudem denkbar, dass die Verpackungsanlage 100 und die Reinigungsvorrichtung 1 derart kommunizieren, dass wenn die Verkleidung 100a durch einen Anwender geöffnet wird, dass der Reinigungsprozess umgehend gestoppt wird. Dies verhindert die Verletzung des Anwenders durch die Reinigungsanlage 1 und den Austritt von Reinigungsmitteln aus der Produktionsanlage 100 bei geöffneter Verkleidung 100a.

Obwohl die Erfindung in Bezug auf spezifische Ausführungsformen für eine vollständige und klare Offenbarung beschrieben wurde, sind die beigefügten Ansprüche nicht auf diese Weise zu beschränken, sondern so auszulegen, dass sie alle Modifikationen und alternativen Konstruktionen verkörpern, die einem Fachmann auf entsprechende Weise einfallen können, welche in die hier dargelegte Grundlehre fallen. Zusätzlich können die Merkmale verschiedener Implementierungsausführungsformen kombiniert werden, um weitere Ausführungsformen der Erfindung zu bilden.

### Bezugszeichenliste

- 1: Reinigungsvorrichtung
- 2: mobile Basisvorrichtung
- 3: Mehrachsroboter, 6-achsig seriell-kinematischer Knickarmroboter
- 4: Steuervorrichtung
- 5: interne Versorgungseinrichtung
- 6: externe Versorgungseinrichtung
- 21: Rad, Raupenkette
- 22: Feststellvorrichtung
- 23: Antriebsvorrichtung
- 24: Energiequelle
- 31: Roboterarm
- 32: Reinigungskopf
- 33: Reinigungsdüse
- 41: Ein- und Ausgabe-Schnittstelle
- 42: Gehäuse
- 51: Versorgungstank
- 52: Versorgungstank
- 53: Versorgungsleitung
- 54: Versorgungsleitung
- 55: Auffang-/Absaugvorrichtung
- 61: externe Basisvorrichtung
- 62: Rad der externen Basisvorrichtung
- 100: Produktionsanlage, Verpackungsanlage
- 100a: Verkleidung
- A: erste Rotationsachse
- B: zweite Rotationsachse
- C: zweite Rotationsachse
- E: Ebene

## Patentansprüche

1. Reinigungsvorrichtung (1) zur Reinigung von Produktionsanlagen (100), insbesondere von Verpackungsanlagen (100) zum Verpacken von kleinstückigen Artikeln, wobei die Reinigungsvorrichtung (1) umfasst:
eine mobile Basisvorrichtung (2), die auf einer Ebene (E) bewegbar ist,
mindestens einen Mehrachsroboter (3), der auf der mobilen Basisvorrichtung (2) angeordnet ist und vorzugsweise am freien Ende mindestens einen Reinigungskopf (32) aufweist, wobei der Reinigungskopf (32) dazu konfiguriert ist, mindestens eine Produktionsanlage (100) zu reinigen,
**gekennzeichnet durch:**
eine Steuervorrichtung (4), die dazu konfiguriert ist, die mobile Basisvorrichtung (2) und/oder den Mehrachsroboter (3) und/oder den Reinigungskopf (32) zu steuern, um eine Produktionsanlage (100) vorzugsweise vollautomatisch zu reinigen.

2. Reinigungsvorrichtung (1) gemäß dem vorangegangenen Anspruch, **dadurch gekennzeichnet, dass**
der Mehrachsroboter (3) ein mehrachsiger, bevorzugt 6-achsig seriell-kinematischer Knickarmroboter (3) ist.

3. Reinigungsvorrichtung (1) gemäß einem der vorangegangenen Ansprüche, **dadurch gekennzeichnet, dass**
der Reinigungskopf (32) ein mit Druck beschickbarer Reinigungskopf (32) ist, vorzugsweise mit mindestens einer auswechselbaren Reinigungsdüse (33), wobei der Reinigungskopf (32) noch bevorzugter mit einem Reinigungsmittel wie Luft, Dampf, Wasser, Sterilisationsmittel, Reinigungslösung und/oder Trockeneis beschickbar ist und der Reinigungskopf (32) bevorzugt eine Kamera, eine Beleuchtung, eine Heizvorrichtung, einen Bewegungssensor und/oder eine Messsensorik aufweist.

4. Reinigungsvorrichtung (1) gemäß einem der vorangegangenen Ansprüche, **dadurch gekennzeichnet, dass**
die mobile Basisvorrichtung (2) Räder (21) oder eine Raupenkette (21), insbesondere mit Saugnäpfen aufweist, um sich auf der Ebene (E), die insbesondere, waagrecht, schräg oder senkrecht ist, fortzubewegen, und/oder
die mobile Basisvorrichtung (2) eine Antriebsvorrichtung (23), bevorzugt einen von der Steuervorrichtung (4) steuerbaren elektrischen Servo-Motor aufweist, um die mobile Basisvorrichtung (2) auf der Ebene (E) anzutreiben, und/ oder
die mobile Basisvorrichtung (2) eine Feststellvorrichtung (22) aufweist, um eine Bewegung der mobilen Basisvorrichtung (2) temporär zu blockieren oder unwirksam zu machen.

5. Reinigungsvorrichtung (1) gemäß einem der vorangegangenen Ansprüche, **dadurch gekennzeichnet, dass** die Reinigungsvorrichtung (1) des Weiteren umfasst:
eine interne Versorgungseinrichtung (5), mit mindestens einem Versorgungstank (51, 52), der auf der mobilen Basisvorrichtung (2) angeordnet ist und dazu konfiguriert ist, den Reinigungskopf (32) über Versorgungsleitungen (53, 54) mit wenigstens einem Reinigungsmittel zu versorgen, wobei die Steuervorrichtung (4) bevorzugt über Energie-, Signal- und Medienleitungen (53, 54) mit der mobilen Basisvorrichtung (2) und dem Mehrachsroboter (3) verbunden ist, oder
eine externe Versorgungseinrichtung (6), bevorzugt mobil, auf der die Steuervorrichtung (4) angeordnet ist und die mindestens einen Versorgungstank (51, 52) aufweist, der dazu konfiguriert ist, den Reinigungskopf (32) über Versorgungsleitungen (53, 54) mit wenigstens einem Reinigungsmittel zu versorgen, wobei die Steuervorrichtung (4) bevorzugt drahtlos mit der mobilen Basisvorrichtung (2) und dem Mehrachsroboter (3) verbunden ist, wobei
die Steuervorrichtung (4) und die Versorgungstanks (51, 52) in einem, vorzugsweise demselben Gehäuse (42) untergebracht sind, das dazu konfiguriert ist, die Steuervorrichtung (4) und die Versorgungstanks (51, 52) vor Reinigungsflüssigkeiten und Umwelteinflüssen zu schützen.

6. Reinigungsvorrichtung (1) gemäß einem der vorangegangenen Ansprüche, **dadurch gekennzeichnet, dass**
die Steuervorrichtung (4) eine Ein- und Ausgabe-Schnittstelle (41) aufweist, über die Reinigungsprogramme auf die Steuervorrichtung (4) einprogrammiert oder aufgespielt werden können und die insbesondere dazu konfiguriert ist, einen Betriebszustand der Reinigungsvorrichtung (1) mit Informationen über den Reinigungszustand der Produktionsanlage (100), die Laufzeit des Reinigungsprogramms und/oder den Versorgungszustand der Reinigungsvorrichtung (1) anzuzeigen und/oder
die Steuervorrichtung (4) dazu konfiguriert ist, dass ein Anwender die Reinigungsvorrichtung (1) auf einen zumindest anteiligen manuellen Reinigungsmodus umschalten kann, um eine Steuerung der mobilen Basisvorrichtung (2) und des Mehrachsroboters (3) zu übernehmen, und/oder um die Anteile der Reinigungsvorrichtung (1) für den Betrieb eines vom Anwender manuell bewegbaren Reinigungskopfs (32) zu nutzen.

7. Reinigungsvorrichtung (1) gemäß einem der vorangegangenen Ansprüche, **dadurch gekennzeichnet, dass**
die Reinigungsvorrichtung (1) eine eigene Trockeneisproduktionseinheit aufweist, die zum Produzieren von Trockeneis und zum Versorgen des Reinigungskopfs (32) mit Trockeneis konfiguriert ist, wobei die Trockeneisproduktionseinheit (51) auf der mobilen Basisvorrichtung (2) angeordnet ist.

8. Reinigungsvorrichtung (1) gemäß einem der vorangegangenen Ansprüche, **dadurch gekennzeichnet, dass**
die Reinigungsvorrichtung (1) durch eine Energiequelle (24), bevorzugt eine Batterie, ein Akku oder eine Brennstoffzelle, mit Energie versorgt wird.

9. Reinigungsvorrichtung (1) gemäß einem der vorangegangenen Ansprüche, **dadurch gekennzeichnet, dass**
die Reinigungsvorrichtung (1) eine Auffang-/Absaugvorrichtung (55) aufweist, die auf der mobilen Basisvorrichtung (2) angeordnet ist und dazu konfiguriert ist Reinigungsrückstände und herabtropfende Reinigungsflüssigkeit aus der Produktionsanlage (100) aufzufangen und abzusaugen.

10. Verpackungsanlage (100) zum Verpacken von kleinstückigen Artikeln, umfassend
eine Reinigungsvorrichtung (1) gemäß einem der vorangegangenen Ansprüche und
wenigstens ein Arbeitsorgan (102) zum Halten und ggf. Fördern eines zu verpackenden Artikels, wobei die Reinigungsvorrichtung (1) ausgebildet ist, um das wenigstens eine Arbeitsorgan (102) unter Verwendung des Reinigungskopfs (32) zu reinigen, wobei sich das Arbeitsorgan (102) vorzugsweise an einem um eine Drehachse rotierbaren Rotationskopf (101) befindet, wobei das Arbeitsorgan (102) und der Rotationskopf (101) dazu konfiguriert sind, sich zu bewegen bzw. zu rotieren, wenn die Reinigungsvorrichtung (1) eine Reinigung durchführt, und/oder
die Verpackungsanlage (100) und die Reinigungsvorrichtung (1) dazu konfiguriert sind, bevorzugt kontaktlos, in Kommunikation zu stehen, so dass das Arbeitsorgan (102) einen Bewegungsablauf durchführt der mit einem Reinigungszyklus der Reinigungsvorrichtung (1) abgestimmt ist, wobei noch bevorzugter die Reinigungsvorrichtung (1) dazu konfiguriert ist intermittierend oder kontinuierlich bewegte Abschnitte des Arbeitsorgans (102), bevorzugt mittels einer Schwenkbewegung des Mehrachsroboters (3) zu reinigen.

11. Verpackungsanlage (100) gemäß dem vorangehenden Anspruch, wobei
die Verpackungsanlage (100) mehrere artikelführende Rotationsköpfe (101) aufweist, die nach dem Prinzip aneinander abrollender Kreise zusammenwirken, wobei die Rotationsköpfe (101) vorzugsweise vertikal exakt übereinander oder zumindest vertikal überlappend angeordnet sind, wobei die mobile Basisvorrichtung (2) derart konfiguriert ist, um unter dem untersten der Rotationsköpfe (101) angeordnet zu werden, bevorzugt derart, um eine von den Rotationsköpfen (101) herabtropfende Reinigungsflüssigkeit aufzufangen.

12. Verpackungsanlage (100) gemäß dem vorangehenden Anspruch, wobei
die Verpackungsanlage (100) eine Verkleidung (100a) umfasst, die geöffnet sein kann um die Reinigungsvorrichtung (1) in der Verpackungsanlage (100) aufzunehmen und geschlossen sein kann, wenn die Reinigungsvorrichtung (1) sich in der Verpackungsanlage (100) befindet.

13. Reinigungsverfahren von Produktionsanlagen (100), insbesondere von Verpackungsanlagen (100) zum Verpacken von kleinstückigen Artikeln, wobei das Reinigungsverfahren folgende Schritte umfasst:
Automatisiertes, teilautomatisiertes und/oder manuelles Bewegen einer Reinigungsvorrichtung (1) in die Produktionsanlage (100), wobei die Reinigungsvorrichtung (1) eine mobile Basisvorrichtung (2) mit mindestens einem Mehrachsroboter (3) der auf der mobilen Basisvorrichtung (2) angeordnet ist und am freien Ende mindestens einen Reinigungskopf (32) aufweist, und
Automatisiertes Reinigen der Produktionsanlage (100) durch den mindestens einen Reinigungskopf (32).

14. Reinigungsverfahren gemäß dem vorangehenden Anspruch **dadurch gekennzeichnet, dass** es des Weiteren mindestens einen der folgenden Schritte umfasst
Reinigen der Produktionsanlage (100) mittels Luft, Dampf, Wasser, Sterilisationsmittel, Reinigungslösung und/oder Trockeneis, und bevorzugt
Betreiben von rotierenden Bearbeitungsstationen innerhalb der Produktionsanlage (100) zur Unterstützung der Reinigung,
Auffangen und Absaugen von Reinigungsrückständen und herabtropfenden Reinigungsflüssigkeiten.

15. Reinigungsverfahren gemäß einem der beiden vorangehenden Ansprüche **dadurch gekennzeichnet, dass**:
die Produktionsanlage (100) und die Reinigungsvorrichtung (1), bevorzugt kontaktlos, in Kommunikation treten, so dass Bewegungsabläufe in der Produktionsanlage (100) mit einem Reinigungszyklus der Reinigungsvorrichtung (1) abgestimmt werden, wobei noch bevorzugter die Reinigungsvorrichtung (1) intermittierend oder kontinuierlich bewegte Abschnitte des Arbeitsorgans (102), bevorzugt mittels einer Schwenkbewegung des Mehrachsroboters (3), reinigt.
